# EUROPÄISCHE PATENTSCHRIFT

(11) **EP 3 862 236 B1**
(45) Veröffentlichungstag und Bekanntmachung des Hinweises auf die Patenterteilung: **14.12.2022**
(21) Anmeldenummer: 21155264.1
(22) Anmeldetag: 04.02.2021
(51) Int. Cl.: B60T 7/12, B60T 13/12

(54) **NOTBREMSEINRICHTUNG FÜR EIN HYDRAULISCHES BREMSSYSTEM**
EMERGENCY BRAKING DEVICE FOR A HYDRAULIC BRAKE SYSTEM
DISPOSITIF DE FREINAGE D'URGENCE POUR UN SYSTÈME DE FREINAGE HYDRAULIQUE

(30) Priorität: 04.02.2020 DE 102020102716
(43) Veröffentlichungstag der Anmeldung: 11.08.2021
(73) Patentinhaber: Karlsruher Institut für Technologie, 76131 Karlsruhe (DE)
(72) Erfinder: Frey, Michael, 76275 Ettlingen (DE); Hertzler, Philipp, 71638 Ludwigsburg (DE); Knoch, Eva-Maria Judith, 76646 Bruchsal (DE)

(56) Entgegenhaltungen:
- WO-A1-2008/040720
- DE-A1-102010 002 429
- FR-A1- 3 079 800

## Beschreibung

Die Erfindung betrifft eine Notbremseinrichtung für ein hydraulisches Bremssystem, vorzugsweise eines Fahrzeugbremssystems gemäß dem ersten Patentanspruch.

Eine Notbremseinrichtung ist im Rahmen der Anmeldung eine optionale Komponente eines hydraulischen Bremssystems, die geeignet ist, autark, d.h. z.B. im Falle eines kompletten Ausfalls des Bordnetzes in einem Fahrzeug, einem Förder- oder Transportmittel oder in einem anderen technischen Antriebssystem, eine kontrollierte Bremsung einzuleiten und durchzuführen. Dabei greift die Notbremseinrichtung in das hydraulische Bremssystem aktiv ein, ohne dabei Komponenten zu ersetzen oder die Funktion des Bremssystems abzuändern. Eine solche Notbremseinrichtung ist aus der Veröffentlichung WO 2008/040720 A1 bekannt.

Im Fall eines vollständigen Ausfalls des Bordnetzes in einem Fahrzeug funktionieren üblicherweise auch die fahrzeugeigenen Regelsysteme nicht mehr. Eine für das sichere Abbremsen des Fahrzeugs notwendige, geregelte Ansteuerung der Fahrzeugbremsanlage ist damit nicht mehr möglich. Herkömmliche Notbremssysteme von Fahrzeugen wie z.B. bei Schienenfahrzeugen führen dagegen bei einer Auslösung einer Notbremsung wie z.B. bei einem Ausfall des Bordnetzes eine sofortige und ungeregelte Maximalbremsung aus. Eine Sofortbremsung ist oft nicht nur unnötig, wie auch bei übersichtlichen Verkehrsverhältnissen wie z.B. leeren Straße, sondern stellt auch eine Ursache für Folgeunfälle dar. Insbesondere besteht ein Verletzungsrisiko für Insassen bei einer abrupten Bremsung mit größeren Verzögerungswerten. Ferner besteht die Gefahr, dass ein Fahrzeug bei einer Kreuzungsüberfahrt quer zur Fahrtrichtung, oder etwa auf Eisenbahngleisen, zum Stillstand kommt.

Ferner sind Notbremssysteme bekannt, die eine Stromversorgung z.B. aus dem Fahrzeug-Bordnetz oder aus einer Notstromquelle erfordern und die bei Ausfall mit sofortiger Wirkung das Fahrzeug möglichst schnell bis zum Stillstand abbremsen.

Davon ausgehend liegt eine **Aufgabe der Erfindung** darin, eine Notbremseinrichtung für ein hydraulisches Bremssystem vorzuschlagen, die eine situationsangepasste Teillastbremsung ermöglicht und dabei ohne eine Stromversorgung durchführt.

Die Aufgabe wird mit einer Notbremseinrichtung für ein hydraulisches Bremssystem mit den Merkmalen des ersten Patentanspruchs gelöst. Auf diesen bezogene Unteransprüche geben vorteilhafte Ausgestaltungen wieder.

Die Lösung der Aufgabe umfasst eine Notbremseinrichtung für ein hydraulisches Bremssystem mit einem Bremspedal und vorzugsweise einem Bremskraftverstärker mit einer Translationsstange zu einem Hauptbremszylinder. Das Konzept sieht vor, die Notbremseinrichtung axial auf die Translationsstange wirkend vorzugswiese als Zwischenelement zwischen Bremskraftverstärker und Hauptbremszylinder einzusetzen.

Die Betätigung des Hauptbremszylinders beispielsweise bei einem Ausfall der Spannungsversorgung wird durch die Notbremseinrichtung ermöglicht. Die Notbremseinrichtung leitet eine Notbremsung mit voreingestellten Bremsparametern ein, ohne dabei in den hydraulischen Kreislauf des Fahrzeugbremssystems einzugreifen. Sie hat damit keine Auswirkungen auf die zulassungsrelevanten Eigenschaften der hydraulischen Fahrzeugbremsanlage. Der mechanische Aufbau der eigentlichen hydraulischen Fahrzeugbremsanlage bleibt damit unverändert und entspricht dabei dem serienmäßig verbauten System gemäß Stand der Technik.

Die vorgeschlagene Notbremseinrichtung umfasst mindestens einen, vorzugsweise genau einen Hydraulikzylinder mit mindestens einem, vorzugsweise genau einem Kolben, der axial zur Translationsstange geführt wird. Die Translationsstange durchdringt den (mindestens einen) Hydraulikzylinder vorzugsweise in seiner vollen Länge und verbindet das Bremspedal oder den Bremskraftverstärker mit dem Hauptbremszylinder. Die Translationsstange ist dabei axial im Hydraulikzylinder, Bremskraftverstärker und Hauptbremszylinder verschiebbar angeordnet, wobei der Hydraulikzylinder starr mit dem Bremspedal oder dem Bremskraftverstärker und dem Hauptbremszylinder verbunden ist. Das Innenvolumen des (mindestens einen) Hydraulikzylinders wird durch den (mindestens einen) Kolben in mindestens eine, vorzugsweise genau eine Arbeitskammer und mindestens eine, vorzugsweise genau eine Systemkammer unterteilt, wobei die (mindestens eine) Systemkammer mit mindestens einer Entlüftungsbohrung aus dem Hydraulikzylinder versehen ist.

Im Folgenden wird insbesondere für mindestens einen Kolben, Hydraulikzylinder, Arbeitskammer und Systemkammer - sofern nicht anders angegeben - stellvertretend für jede Anzahl der Singular verwendet. Im Rahmen der nachfolgend beschriebenen Ausführungsbeispiele werden stellvertretend für Ausführungen mit mehreren Hydraulikzylindern und/oder mehreren Kolben, Arbeitskammern und/oder Systemkammern auch eine Ausführung mit zwei Kolben, zwei Arbeitskammern, und einer Systemkammer sowie eine Ausführung mit zwei Kolben, zwei Arbeitskammern und zwei Systemkammern beschrieben.

Ferner ist eine auf den Kolben in Richtung der Arbeitskammer und damit in Richtung des Bremspedals oder des Bremskraftverstärkers axial zur Translationsstange wirkende elastische Feder vorgesehen, vorzugsweise als eine Druckfeder in der Systemkammer, weiter bevorzugt um die Translationsstange angeordnet.

Mit einer Einleitung eines unter Druck stehenden Druckmediums in die Arbeitskammer wird der Kolben gegen die elastische Feder, d.h. axial auf der Translationsstange in Richtung des Hauptbremszylinders gedrückt. Für die Einleitung ist eine in die Arbeitskammer ausmündende Einlassöffnung mit einem Anschluss an eine Druckquelle vorgesehen.

In der Systemkammer ist ferner ein axial auf der Translationsstange verschiebbarer Anschlagmitnehmer für den Kolben vorgesehen. Dieser ist über eine selbsthemmende Verstellaktorik in der mindestens einen Systemkammer positionierbar.

Wesentlich ist, dass die Translationsstange zumindest einen Absatz mit einer Querschnittsänderung, vorzugsweise einhergehend mit einer Querschnittsvergrößerung, weiter bevorzugt mit einem um die Translationsstange umlaufenden Absatz, zwischen dem Kolben und dem Hauptbremszylinder aufweist. Der Absatz dient als ein axialer Anschlag für den Kolben (in Richtung des Hauptbremszylinders), nicht aber für den Anschlagmitnehmer auf der Translationsstange.

Da der Kolben im Hydraulikzylinder durch die Feder von dem Absatz weg in eine Position in die Arbeitskammer geschoben wird, ist die Translationsstange zwischen Bremspedal oder Bremskraftverstärker und Hauptbremszylinder axial beweglich. In vorteilhafter Weise erlaubt damit die Notbremseinrichtung nach wie vor die uneingeschränkte Betätigung der Betriebsbremsanlage durch den Fahrer oder andere technische Systeme.

Erst im Falle eines Ausfalls der Spannungsversorgung (Stromausfall) oder eines anderen die Notbremsung auslösenden Ereignisses wird die Notbremseinrichtung aktiv. Es erfolgt ein Einleiten eines Druckmediums und damit ein Aufbau eines Überdrucks in der Arbeitskammer, wodurch der Kolben entgegen der Federkraft an den Absatz auf der Translationsstange bewegt wird, die Translationsstange mit dem Auftreffen auf dieser dann mitnimmt und so über die Translationsstange eine Stellbewegung und damit eine Stellkraft an den Hauptbremszylinder weiterleitet. Der axial auf der Translationsstange verschiebbare Anschlagmitnehmer dient dann der einstellbaren Wegbegrenzung für den Kolben und damit auch für die Translationsstange. Damit einher geht auch eine Wegbegrenzung für die Stellbewegung im Hydraulikzylinder und damit eine Begrenzung der Bremskraft. Die so einstellbare Bremskraft wird folglich durch die selbsthemmende Verstellaktorik für den Anschlagmitnehmer vorgegeben und wird während einer Notbremsung nicht verändert, im Falle eines Stromausfalls durch die selbsthemmende Verstellaktorik auch nicht veränderbar.

Die Einstellbarkeit der Verstellaktorik und damit der Positionierung des Anschlagmitnehmers ist grundsätzlich, eine entsprechende Spannungsversorgung oder eine andere Energieversorgung vorausgesetzt, jederzeit gegeben. Beispielsweise lassen sich so Betriebszustände des hydraulischen Bremssystems oder eines damit ausgerüsteten Fahrzeugs sowie Umgebungseinflüsse in der Positionierung der Verstellaktorik widerspiegeln. Für die Erfindung relevante Betriebszustände sind insbesondere die aktuelle Geschwindigkeit, automatische oder manuelle Bedienung, Kurzstreckenfahrt, eine bereits eingeleitete Bremsung oder auch optional ergänzend Anpassung an das Bremsverhalten und Beschleunigungsverhalten des Fahrers, sportliche oder defensive Fahrweise. Zu den relevanten Umgebungseinflüssen zählen insbesondere die Beschaffenheit der Fahrbahnoberfläche wie Rauhigkeit, Bodenwellen in Längs- oder Querrichtung, Schlaglöcher oder eingelassene Gleise sowie die Witterung wie Regen, Schneefall oder Frost. Zu den Einflussgrößen durch die Verkehrssituation zählen Stadt- oder Überlandfahrten, Tunnelfahrt, Autobahn mit oder ohne Standstreifen, das Vorhandensein anderer Verkehrsteilnehmer sowie deren Verhalten. Es wird vorgeschlagen, dass die Positionierung der Verstellaktorik laufend erfolgt, wobei für die Erfassung der genannten Betriebszustände und Umgebungs- und Verkehrseinflüsse nicht nur fahrzeugeigene Erfassungssysteme, sondern auch externe Systeme (z.B. V2X-Kommunikation) oder Geodaten (z.B. GPS-Ortsdaten mit den dort hinterlegten Daten) nutzbar sind.

Ein Vorteil der vorgenannten Lösung ist ein Sicherheitsgewinn für alle Fahrzeuginsassen und eine Reduktion der Gefahr von Sekundärkollisionen, insbesondere auf die situationsangepasste Einstellbarkeit über den einstellbaren Anschlagmitnehmer.

Ein zweiter Vorteil ist die unabhängig vom Notbremssystem uneingeschränkte Betätigung des hydraulischen Bremssystems durch den Fahrer, Bediener oder andere technische Systeme.

Ferner lässt das Notbremssystem jederzeit, d.h. auch während einer Aktivierung einen zusätzlichen Eingriff durch den Fahrer, Bediener oder andere technische Systeme zu. Das Notbremssystem gibt nur eine durch den Stellweg der Translationsstange vorgegebene minimale Notbremskraft vor. Der Stellweg lässt sich jederzeit und unabhängig von der Einstellung der Verstellaktorik manuell erhöhen.

Ein weiterer Vorteil der Lösung liegt folglich auch darin, dass keine Eingriffe in die zulassungsrelevanten Komponenten der hydraulischen Fahrzeugbremsanlage erfolgen.

Diese Vorteile sind auch auf die Anordnung des Notbremssystems zwischen Bremspedal oder Bremskraftverstärker und Hauptbremszylinder und die Ausführung mit rein mechanischen bzw. hydraulischen Komponenten zurückzuführen.

Eine optionale Ausführungsform der Notbremseinrichtung sieht vor, den Hydraulikzylinder mit Kolben, Arbeitskammer, Systemkammer rotationssymmetrisch und/oder konzentrisch um die Translationsstange anzuordnen. Weiterhin oder alternativ wird optional vorgeschlagen, die Translationsstange im Durchtritt durch den Hydraulikzylinder rotationssymmetrisch zu gestalten. Die vereinfacht insbesondere die Fertigung (Drehteile) und vermeidet Kanten im Querschnitt und damit zusätzliche Undichtigkeitsquellen im Bereich des Kolbens.

Eine weitere optionale Ausführungsform der Notbremseinrichtung sieht vor, die Mantelfläche der Translationsstange von der Querschnittsänderung ausgehend und zum Hauptbremszylinder hin gerichtet zumindest abschnittsweise mit einem gleichbleibenden Querschnitt eine axiale Gleitfläche für den verschiebbaren Anschlagmitnehmer auszugestalten. Damit wird der Anschlagmitnehmer in vorteilhafter Weise direkt auf der Translationsstange geführt, ohne auf diese eine axiale Kraft (abgesehen von der Reibkraft) auszuüben.

Eine weitere optionale Ausführungsform der Notbremseinrichtung sieht eine selbsthemmende Verstellaktorik für die Positionierung des Anschlagmitnehmers in der Systemkammer mit reversibel aktivier- und lösbarem elektromechanischen Arretierungsmittel vor. Die Arretierungsmittel blockieren im aktivierten Zustand zusätzlich die Verschiebbarkeit des Anschlagsmitnehmers, unterstützen dabei die Selbsthemmung und entlasten somit die Verstellaktorik. Die Arretierungsmittel umfassen vorzugsweise Riegel-, Einrast-, Reib- oder Zahnelemente die vorzugsweise mit elektromagnetisch erzeugter Kraft entweder formschlüssig oder reibschlüssig direkt an dem Anschlagmitnehmer an- oder eingreifen und im aktivierten Zustand jede Bewegung dieses oder zumindest die Verstellung blockieren, vorzugsweise unterbinden, ohne dabei die Translationsstange in der Beweglichkeit einzuschränken. Der aktivierte Zustand ist vorzugsweise ein stabiler Ruhezustand. Im Ruhezustand nimmt das Arretierungsmittel eine von mehreren Ruhepositionen ein. Bei der Arretierung bedarf es dabei keiner elektromagnetisch erzeugten Kraft. Die Ruheposition wird vielmehr beispielweise durch eine Vorspannung oder einer Federkraft eingenommen und gehalten. Erst durch eine Beaufschlagung mit einer elektromechanischen Kraft durch elektromechanische Arretierungsmittel wird dieser Ruhezustand aufgehoben und die Arretierung des Anschlagmitnehmers aufgehoben. Weiter bevorzugt weisen die Arretierungsmittel nur einen Ruhezustand im aktivierbaren Zustand auf, d.h. sie arretieren bei einer Notbremsung den Anschlagmitnehmer auf der jeweils eingestellten Position zusätzlich zur Selbsthemmung automatisch. Vorzugsweise sind die Arretierungsmittel wie der Anschlagmitnehmer in der Systemkammer angeordnet.

Eine weitere optionale Ausführungsform der Notbremseinrichtung sieht eine Ausgestaltung der selbsthemmenden Verstellaktorik mit zumindest einen motorischen Antrieb, weiter bevorzugt einen Stellmotor mit Schneckengetriebe vor. Dabei hat es sich als zweckmäßig gezeigt, dass im Rahmen einer bevorzugten Ausgestaltung der motorische Antrieb und das Schneckengetriebe der Verstellaktorik außerhalb, vorzugsweise seitlich am Hydraulikzylinder angeordnet ist und Übertragungsmittel zwischen dem Schneckengetriebe und dem auf der Translationsstange verschiebbaren Anschlagmitnehmer in der Systemkammer vorgesehen sind, wobei die Übertragungsmittel durch die Entlüftungsbohrung in die Systemkammer einragen. Die Übertragungsmittel umfassen dabei vorzugweise eine Übersetzungswelle mit Stirnrad sowie eine mit dem Stirnrad in mechanischer Wechselwirkung stehende Zahnstange auf dem Anschlagmitnehmer.

Die Erfindung wird anhand von nachfolgenden Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen
**Fig.1** eine schematische Darstellung eines hydraulischen Bremssystems für ein Kraftfahrzeug mit Notbremseinrichtung,
**Fig.2** eine Schnittdarstellung eines Ausführungsbeispiels einer Notbremseinrichtung,
**Fig.3a** **und b** Detailansichten des Anschlagmitnehmers gemäß dem Ausführungsbeispiel gemäß **Fig.2** aus zwei Perspektiven,
**Fig.4a** **bis d** je eine Schnittdarstellung des Ausführungsbeispiels gemäß **Fig.2** in vier verschiedenen Betriebszuständen sowie
**Fig.5a** **und b** jeweils ein Ausführungsbeispiel für eine Notbremseinrichtung mit zwei Kolben, zwei Arbeitskammern, und einer Systemkammer **(a)** und mit zwei Kolben, zwei Arbeitskammern und zwei Systemkammern **(b).**

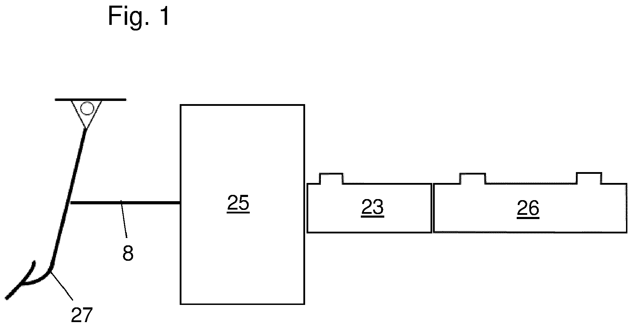

Wie im Ausführungsbeispiel gemäß **Fig.1** dargestellt, ist die Notbremseinrichtung **23** für ein hydraulisches Bremssystem vorzugsweise zwischen dem Bremskraftverstärker **25** und dem Hauptbremszylinder **26** angeordnet, wobei eine Translationsstange **8** vorzugsweise einstückig und durchgängig vom Bremspedal **27** durch den Bremskraftverstärker und die Notbremseinrichtung bis zum Hauptbremszylinder reicht.

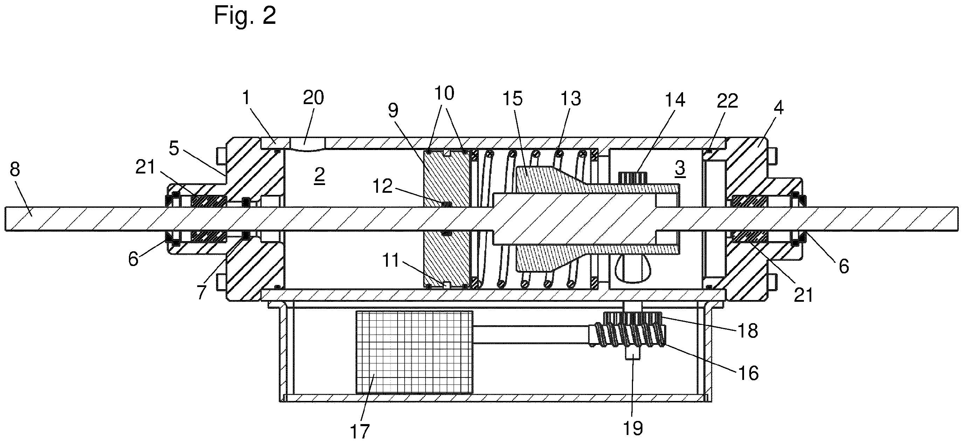

Das Ausführungsbeispiel einer Notbremseinrichtung umfasst, wie in **Fig.2** dargestellt, einen Hydraulikzylinder **1** mit einem Kolben **9,** der das Innenvolumen in eine Arbeitskammer **2** und eine Systemkammer **3** unterteilt. Die Arbeitskammer dient dabei der Aufnahme eines Druckmediums, das über eine Einlassöffnung **20** mit Ventil zu einer nicht dargestellten Druckquelle ein- und ausleitbar ist. Der Hydraulikzylinder wird auf beiden Seiten jeweils durch einen Deckel verschlossen, einen zum Hauptbremszylinder weisenden Deckel **4** und einen zum Bremskraftverstärker weisenden Deckel **5.** Der Deckel auf der Seite des Hauptbremszylinders übernimmt die Trennung der Arbeitskammer gegen die Umgebung, verhindert die Leckage des Druckmittels wie Hydrauliköl und Druckverlust mittels eines O-Rings **22** am Gehäuse und einer Stangendichtung **7** an der Translationsstange **8.** Zudem wird das Eindringen von Schmutz durch einen Abstreifer **6** verhindert. Der an den Hauptbremszylinder angrenzende Deckel dient dem Schutz gegen eindringenden Schmutz, ebenfalls mittels eines Abstreifers **6** und eines O-Rings. Die Dichtungstechnik entspricht hierbei dem Stand der Technik. Beide Deckel bilden zudem Aufnehmer für Gleitbuchsen **21** in denen die Translationsstange reibungsarm axial bewegbar ist.

Auf der Translationsstange ist im Hydraulikzylinder **8** der Kolben **9** axial, d.h. einachsig beweglich angeordnet. Der Kolben wird auf der Translationsstange im Hydraulikzylinder von einer einfach wirkenden Druckfeder **13** in Richtung der Arbeitskammer **2** und vom Druckmittel gegen die Druckfeder in Gegenrichtung gedrückt. Ist das Druckmittel drucklos, wird der Kolben durch die Druckfeder in Richtung der Arbeitskammer **2** hinein ausgelenkt. Die Druckfeder ist im Gehäuse befestigt. Dadurch ist der hier beschrieben Hydraulikzylinder ein einfach wirkender Hydraulikzylinder, bei dem das Druckmittel gegen die Feder wirkt.

Der Kolben weist auf seiner Mantelfläche zwei Führungsringe **10** auf, die zusätzlich zur Führung auf der Translationsstange einem Verkanten oder einer Schrägstellung des Kolbens entgegenwirken und die Reibung zwischen Gehäuse und Kolben reduziert. Zudem dient eine Kolbenringdichtung **11** zwischen Gehäuse und Kolben der Vermeidung einer Leckage und damit eines Druckverlusts aus der Arbeitskammer **2** in die Systemkammer **3.** Zwischen Kolben und Translationsstange ist ferner kolbenseitig eine Ringdichtung **12** eingesetzt, ebenfalls zur Vermeidung eines Eindringens von Druckmittel in die Systemkammer **3.** In der Systemkammer **3** ist ferner um die Translationsachse ein Anschlagmitnehmer **15** angeordnet und auf dieser axial bewegbar.

Ferner weist die in **Fig.2** dargestellte Notbremseinrichtung eine selbsthemmende Verstellaktorik für eine Positionierung des Anschlagmitnehmers **15** auf. Diese umfasst im dargestellten Ausführungsbeispiel einen elektrisch betriebenen Stellmotor **17** mit selbsthemmenden Schneckengetriebe, angeordnet neben dem Hydraulikzylinder. Das Schneckengetriebe umfasst eine Schnecke **16,** die eine Drehbewegung übersetzt an ein Schneckenzahnrad **18** auf eine Übersetzungswelle **19** überträgt. Diese wiederum leitet die Drehbewegung durch eine Öffnung in die Systemkammer **3** zum Anschlagmitnehmer **15** weiter, wobei ein Stirnrad **14** die Drehbewegung auf ein Zahnstangenprofil auf den Anschlagmitnehmer **15** überträgt und diesen axial auf der Translationsstange verschiebt.

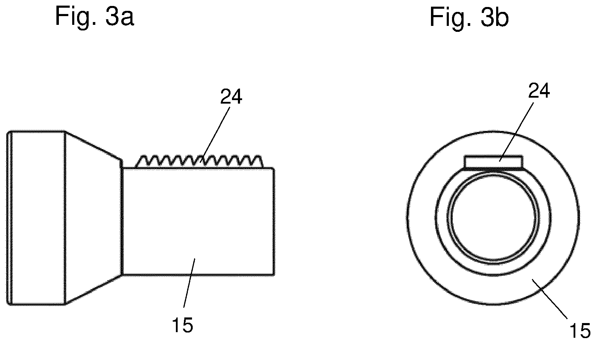

Eine bevorzugte Ausgestaltung des Anschlagmitnehmers mit einem aufgesetzten oder eingearbeiteten Zahnstangen-Profil **24** als Teil der selbsthemmenden Verstellaktorik zeigt **Fig.3a** **und b.** Alternative und nicht dargestellte Ausgestaltungen sehen ein Spindelgetriebe mit Innengewinde oder Außengewinde als selbsthemmende Verstellaktorik auf dem Anschlagmitnehmer vor.

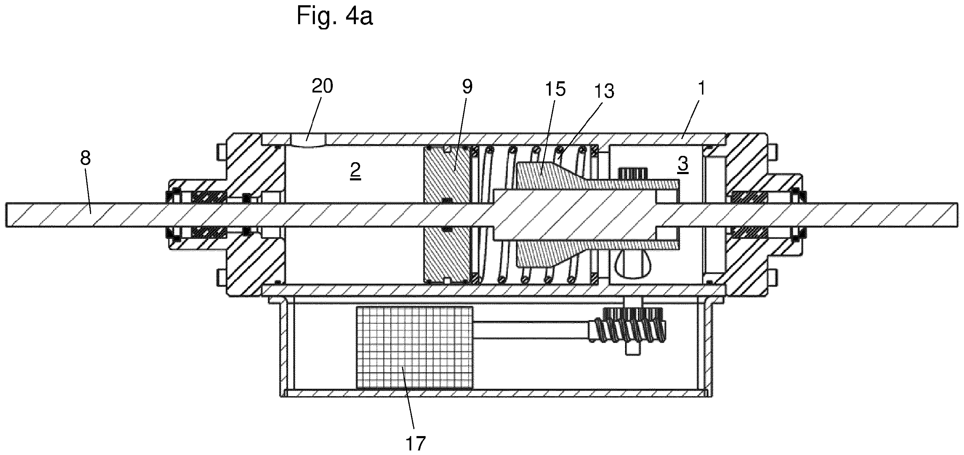

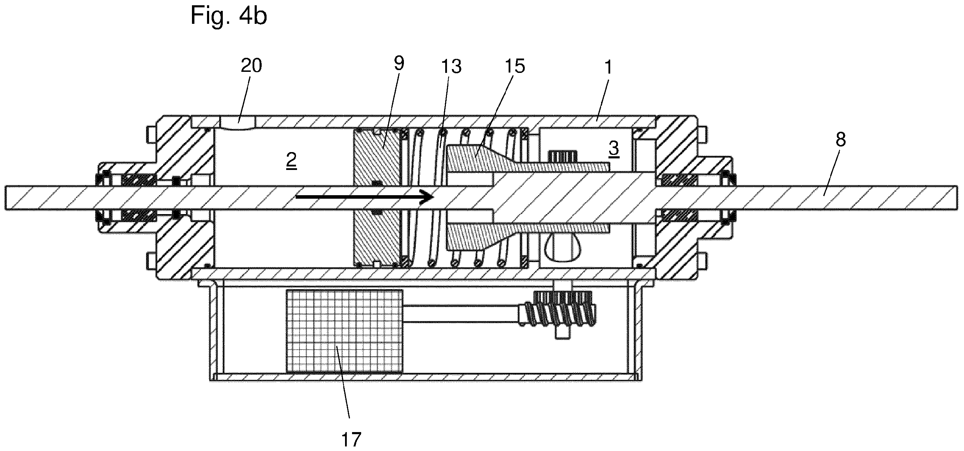

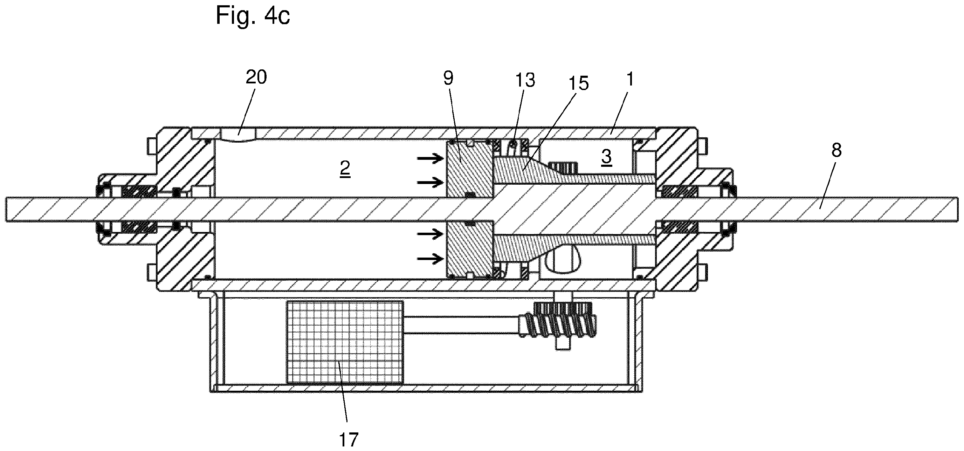

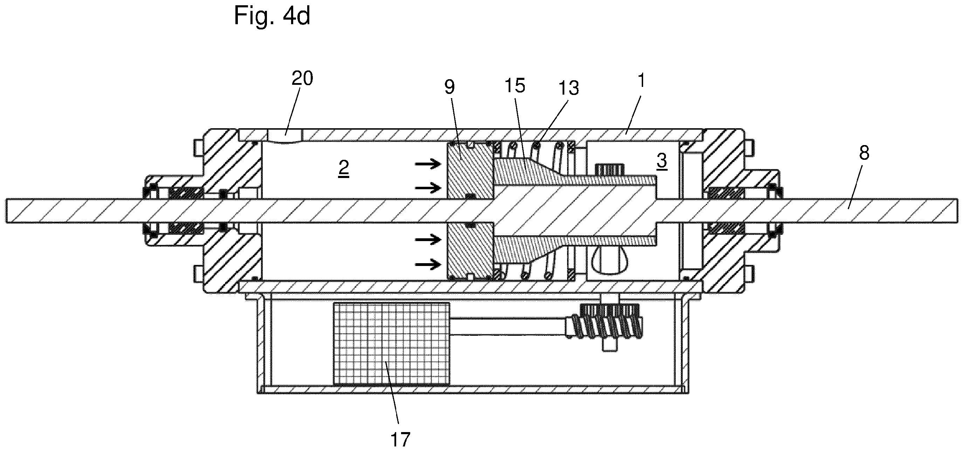

**Fig.4** a bis d zeigen je eine Schnittdarstellung des Ausführungsbeispiels einer Notbremseinrichtung gemäß **Fig.2** in vier verschiedenen Betriebszuständen. Die Notbremseinrichtung wird dabei im Hinblick auf eine eintretende Gefahrensituation in Abhängigkeit von den jeweiligen Betriebszuständen des hydraulischen Bremssystems oder eines damit ausgerüsteten Fahrzeugs sowie Umgebungseinflüsse auf die benötige Bremsung voreingestellt.

Ein erster Betriebszustand gem. **Fig.4a** repräsentiert die Einstellung der Notbremseinrichtung während einer normalen Fahrt. Weder wird dabei das Bremspedal (vgl. **Fig.1****)** betätigt noch befindet sich im der Arbeitskammer **2** ein im Überdruck stehendes Druckmittel. Auf den Kolben wirkt nur die Druckfeder **13** und befindet sich somit in einer entspannten Stellung. Die Translationsstange **8** ist nicht ausgelenkt.

In einem zweiten Betriebszustand gem. **Fig.4b** wird gegenüber dem in **Fig.4a** gezeigten Zustand das Bremspedal betätigt. Dieser Betriebsmodus stellt die Fahrzeugführung durch einen Fahrer bei Zeitpunkt einer vom Fahrer ausgelösten Bremsung dar. Die Translationsstange **8** wird durch die Bremspedalkraft ausgelenkt und gibt diese axiale Bewegung an den Hauptbremszylinder weiter. Der Kolben verharrt an der vorgenannten entspannten Stellung im Hydraulikzylinder und beeinflusst die Bewegung der Translationsstange nicht, d.h. die Notbremseinrichtung verhält sich weiterhin passiv.

Erst in einem dritten Betriebszustand gem. **Fig.4c** erfolgt eine Aktivierung der Notbremseinrichtung mit maximaler Bremskraft, d.h. es erfolgt eine Notbremsung herkömmlichen Ausmaßes. Durch die Einlassöffnung **20** wird Druckmittel in die Arbeitskammer **2** eingeleitet, wobei ein Überdruck entsteht und der Kolben mit Druck beaufschlagt wird. Der Anschlagmitnehmer ist für die Erzeugung einer maximal durch die Notbremseinrichtung einstellbaren Bremskraft durch das Stellgetriebe in seine maximal mögliche Auslenkung in Richtung des Hauptbremszylinders gefahren worden. Der Kolben trifft dabei auf einen Absatz in der Translationsstange **8** auf, schiebt diese bis zum Auftreffen des Kolbens auf den Anschlagmitnehmer **15** mit und wird durch jenen von einer weiteren Auslenkung begrenzt. Die Kraftleitung erfolgt vom Kolben über den vorgenannten Absatz über die Translationsstange in den Hauptbremszylinder bei maximal möglicher Auslenkung.

Im vierten Betriebszustand gem. **Fig.4d** ist die Notbremseinrichtung ebenfalls aktiv, jedoch im Gegensatz zu dem in **Fig.4c** gezeigten Betriebszustand mit einem nicht auf eine maximal mögliche Auslenkung in Richtung des Hauptbremszylinders positionierten Anschlagmitnehmer **15.** Damit einher geht eine Wegbegrenzung des möglichen Kolbenverfahrweges durch den Anschlagmitnehmer, hervorgerufen durch eine Voreinstellung durch den Stellmotor **17.** Für die Notbremsung wird die Arbeitskammer **2** mit einem Druckmittel beaufschlagt, durch den dabei entstehenden Überdruck der Kolben beaufschlagt, zunächst gegen den Anschlag auf der Translationsachse geschoben und mit dieser dann bis zum Auftreffen auf den Anschlagmitnehmer **15** weitergeschoben. Damit erfolgt eine Notbremsung mit reduzierter Bremskraft. Der Anschlagmitnehmer wird durch die Selbsthemmung des Schneckenrads auch im Falle eines Systemausfalls in Position gehalten. Dennoch ist es möglich, aus dem Bremskraftverstärker heraus die Translationsstange durch den Kolben hindurch axial zum Hauptbremszylinder weiter zu schieben und so die eingestellte Notbremskraft manuell weiter zu erhöhen und auch wieder auf diese zurückzufahren.

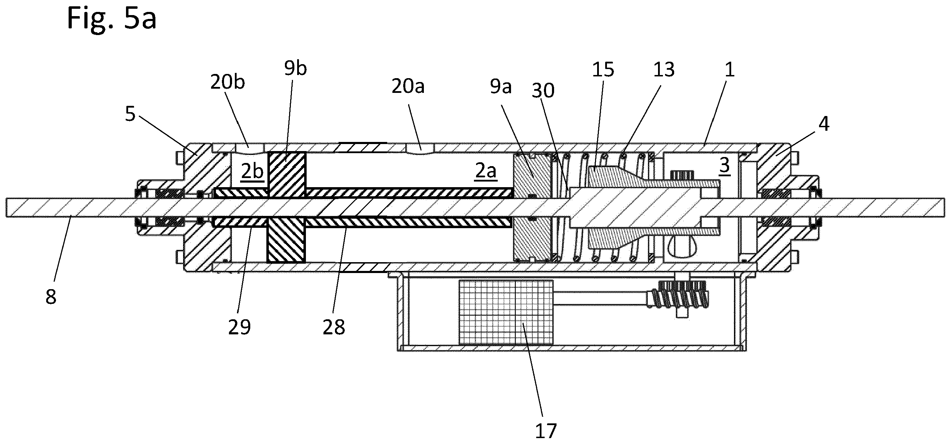

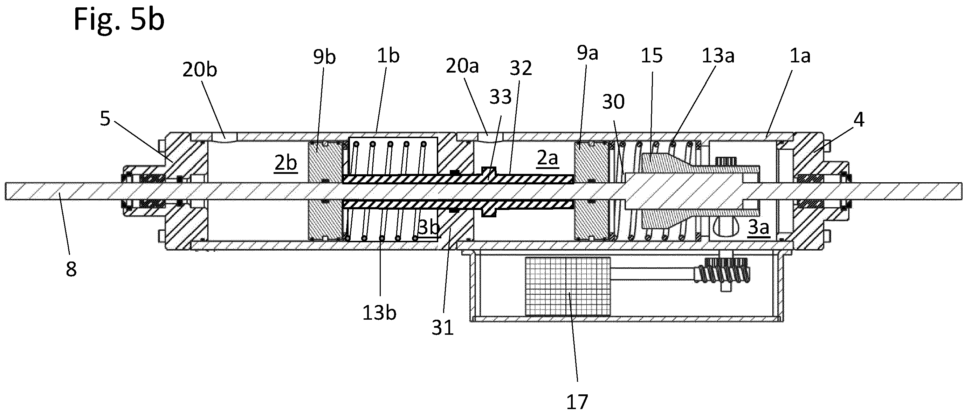

**Fig.5a** **und b** repräsentieren beispielhaft Ausführungsbeispiele mit mehr als einen Kolben, mehr als einen Hydraulikzylinder, mehr als eine Arbeitskammer und/oder mehr als einer Systemkammer.

**Fig.5a** zeigt eine Notbremseinrichtung mit zwei Kolben **9a** und **9b,** zwei Arbeitskammern **2a** und **2b** mit jeweils einer Einlassöffnung **20a** und **20b,** und einer Systemkammer **3** im Innenraum eines Hydraulikzylinders **1.** Die beiden Kolben und die beiden Arbeitskammern sind seriell auf der Translationsstange **8** angeordnet und auf ihr sowie in einem gemeinsamen Hydraulikzylinder **1** geführt. Zwischen diesen Kolben befindet sich auf der Translationsstange geführt eine erste Abstandshülse **28,** zwischen dem zweiten Kolben **9b** und der Innenwandung des zum Bremskraftverstärker weisenden Deckels **4** ist eine zweite Abstandshülse **29** um die Translationsstange angeordnet. Vorzugsweise ist auch die zweite Hülse auf der Translationsstange axial verschiebbar. Beide Abstandshülsen sind vorzugsweise eigenständige Komponenten und auch nicht mit einem der Kolben fest verbunden.

Bei einer Betätigung der Notbremseinrichtung gibt es folgende Möglichkeiten:
- Es wird die nur erste Arbeitskammer **2a** über den ersten Anschluss **20a** mit Druckmedium befüllt, während hingegen die zweite Arbeitskammer **2b** nicht befüllt wird, drucklos verbleibt oder im Falle einer Befüllung nur einen geringeren Druck als in der ersten Arbeitskammer **2a** aufweist. Dadurch werden die beiden Kolben im Zylinder auseinandergedrückt, wobei der zweite Kolben **9b** durch die zweite Abstandshülse **29** gegen eine weitere Verschiebung in Richtung des Deckels **4** begrenzt ist. Der erste Kolben **9a** wird dann gegen die Druckfeder **13** in Richtung des Hauptbremszylinders geschoben, bis er auf den umlaufenden Absatz **30** der Translationsachse auftrifft, die Translationsachse mit der fortgeführten axialen Bewegung mitnimmt und so eine Notbremsung einleitet.
- Es wird zweite Arbeitskammer **2b** über den ersten Anschluss **20b** mit Druckmedium befüllt, während hingegen die erste Arbeitskammer **2a** zunächst nicht befüllt wird, drucklos verbleibt oder im Falle einer Befüllung nur einen geringeren Druck als in der zweiten Arbeitskammer **2b** aufweist. Dadurch werden der zweite Kolben **9b** im Zylinder axial in Richtung des ersten Kolbens **9a** geschoben, die Stellkraft wird über die erste Abstandshülse **28** auf diesen übertragen. Der dadurch entstehende Verbund aus den beiden Kolben und erster Abstandshülse wird dann gegen die Druckfeder **13** wirkend gegen den umlaufenden Absatz geschoben, nimmt damit die Translationsstange in der weiteren Verschiebung mit und löst damit in vorgenannter Weise die Notbremsung aus.

**Fig.5b** zeigt ein dagegen Ausführungsbeispiel mit zwei Kolben **9a** und **9b,** zwei Arbeitskammern **2a** und **2b,** zwei Systemkammern **3a** und **3b** und zwei Druckfedern **13a** und **13b,** vorzugsweise in zwei separaten Hydraulikzylindern **1a** und **1b**, die im Beispiel durch eine Zylinderzwischenwand **31** voneinander getrennt sind. Die Komponenten sind auf der Translationsstange in Serie angeordnet. Die beiden Kolben sind vorzugsweise mechanisch in axialer Richtung gekoppelt, wie im Beispiel durch eine mit den Kolben axial auf der Translationsstange **8** und die Zylinderzwischenwand durchdringende Hülse **32.** Mit einem optionalen Hülsenabsatz **33** in der ersten Arbeitskammer **2a** wird die axiale Verschiebbarkeit der Hülse **32** und damit vorzugsweise der beiden Kolben, zumindest dem ersten Kolben **9a** vom Hauptbremszylinder weg zusätzlich begrenzt. Ferner wird durch den Hülsenabsatz verhindert, dass die Hülse von Arbeitsraum **2a** in den Systemraum **3b** geschoben wird. Dies wäre prinzipiell möglich, wenn schon bei einer kleinen Verschiebung des Kolben **9a** ein Zwischenraum zwischen dem Kolben und der Hülse **32** entstehen würde, so dass der Druck auf die ringförmige Fläche auf der Stirnseite der Hülse wirkt und damit eine Verschiebekraft in Richtung Systemraum **3b** ausübt. Dadurch wird der Kolben **9b** nach links verschoben, bis er an der Gehäusewand ansteht. Während der Verschiebung muss das Volumen der Hülse durch zusätzliches Ölvolumen ausgeglichen werden, so dass eine Bremswirkung der eingeleiteten Notbremsung sich verzögern würde. Im Extremfall würde die Hülse ohne Hülsenabsatz ganz eingeschoben und eine Verbindung zwischen dem Arbeitsraum **2a** und dem Systemraum **3b** herstellen. Da vorzugsweise dieser entlüftet ist, würde das zu einem Druckabfall im Arbeitsraum **2a** und damit zu einer Einschränkung der Bremswirkung führen.

Bei einer Betätigung der Notbremseinrichtung gibt es folgende Möglichkeiten:
- Die erste Arbeitskammer **2a** wird über den ersten Anschluss **20a** mit Druckmedium befüllt, während hingegen die zweite Arbeitskammer **2b** nicht befüllt wird, drucklos verbleibt oder im Falle einer Befüllung nur einen geringeren Druck als in der ersten Arbeitskammer 2a aufweist. Der erste Kolben **9a** wird in Richtung des Hauptbremszylinders verschoben, während der zweite Kolben **9b** - im Falle, dass er nicht über die Hülse **32** fest mit dem ersten Kolben verbunden ist - unverändert durch die zweite (entspannte) Feder **13b** vorgegebene in Ruheposition verharrt. Im Falle, dass die Hülse mit keinem der beiden Kolben fest verbunden ist, verhindert ein ansonsten nur optionaler Hülsenabsatz **33** auf der Hülse eine Hindurchgleiten der Hülse durch die Zylinderzwischenwand **31** und eine mögliche Krafteinleitung auf den zweiten Kolben **9b.** Die Bremskraft wird nur durch den ersten Kolben **9a** in der zuvor genannten Weise ausgelöst und erzeugt.
- Die zweite Arbeitskammer **2b** wird über den ersten Anschluss **20b** mit Druckmedium befüllt, während hingegen die erste Arbeitskammer **2a** zunächst nicht befüllt wird, drucklos verbleibt oder im Falle einer Befüllung nur einen geringeren Druck als in der zweiten Arbeitskammer **2b** aufweist. Der zweite Kolben **9b** wird in Richtung des Hauptbremszylinders verschoben und überträgt über die Hülse **32** Kraft und Bewegung auf den ansonsten kraftlosen ersten Kolben **9a.** Mit einem Auftreffen des ersten Kolbens auf dem Absatz **30** wird die Notbremsung eingeleitet.

Grundsätzlich sind in den beiden Ausführungsbeispielen gemäß **Fig.5a** **und b** auch beide Arbeitskammern **2a** und **2b** über die Einlassöffnungen **20a** und **20b** gemeinsam mit Druck beaufschlagbar. Je nach dem, in welcher der Arbeitskammern **2a** oder **2b** der höhere Druck anliegt, greift einer der zu dem jeweiligen Ausführungsbeispiel beschriebenen vorgenannten Mechanismen.

Die bevorzugte Verwendung der beschriebenen Notbremseinrichtung findet sich bei hydraulischen Bremssystemen im radgebundenen Kraftfahrzeugbereich. Eine alternative Verwendung findet sich im Betrieb bei hydraulischen Bremssystemen im allgemeinen Maschinenbau, insbesondere im Anlagenbau, Werkzeugmaschinen, Bahntechnik, Luftfahrttechnik oder bei mobile Arbeitsmaschinen, wobei ebenfalls technische Prozesse kontrolliert zurückgefahren werden müssen.

Die beschriebenen Notbremssysteme sind folglich grundsätzlich auch für ein hydraulisches Bremssystem mit einer Translationsstange zwischen Hauptbremszylinder und einem die Bremskraft erzeugenden Bremspedal, Bremskraftverstärker oder einem anderem Stellglied beispielsweise in einem Förder- oder Transportmittel oder einem anderen technischen Antriebssystem einsetzbar. Eine solche Verwendung liegt im Rahmen der Erfindung, auch wenn die beschriebenen Ausgestaltungen anhand einer Verwendung im einem Fahrzeug offenbart sind.

Der Einbauort ist direkt an dem für eine Bremsung zuständigen Hydraulikzylinder möglich. Es wird auch hier in vier zuvor beschriebenen Betriebszustände unterschieden. Die Notbremseinrichtung lässt sich auf einen vorbestimmten Betriebsablauf einstellen.

Die Erfindung stellt einen besonderen Anspruch, auf die durch diesen modifizierten Hydraulikzylinder ausgelöste Not-Aktivierung, welche keinen Einfluss auf das bestehende System nimmt. Wesentliches Merkmal dieser Erfindung ist neben der Vollverzögerung, die Einstellbarkeit. Der dritte und vierte Betriebsmodus bildet eine mechanisch-hydraulische Lösung für eine autarke, einstellbare Notbremseinrichtung.

### Bezugszeichenliste:

1 Hydraulikzylinder
2 , 2a, 2b Arbeitskammer
3 , 3a, 3b Systemkammer
4 zum Hauptbremszylinder weisender Deckel
5 zum Bremskraftverstärker oder Bremspedal weisender Deckel
6 Abstreifer
7 Stangendichtung
8 Translationsstange
9 , 9a, 9b Kolben
10 Führungsring
11 Kolbenringdichtung
12 Ringdichtung
13 , 13a, 13b Druckfeder
14 Stirnrad
15 Anschlagmitnehmer
16 Schnecke
17 Stellmotor
18 Schneckenzahnrad
19 Übersetzungswelle
20 , 20a, 20b Einlassöffnung
21 Gleitbuchse
22 O-Ring
23 Notbremseinrichtung
24 Zahnstange
25 Bremskraftverstärker
26 Hauptbremszylinder
27 Bremspedal
28 erste Abstandshülse
29 zweite Abstandshülse
30 umlaufender Absatz auf der Translationsstange
31 Zylinderzwischenwand
32 Hülse
33 Hülsenabsatz

## Patentansprüche

1. Notbremseinrichtung für ein hydraulisches Bremssystem mit einem Bremskraftverstärker oder einem Bremspedal mit einer Translationsstange **(8)** zu einem Hauptbremszylinder, umfassend
a) einen Hydraulikzylinder **(1)** mit mindestens einem axial zur Translationsstange **(8)** auf dieser bewegbaren Kolben **(9),** der das Innenvolumen des Hydraulikzylinders in mindestens eine Arbeitskammer **(2)** und mindestens eine Systemkammer **(3)** mit einer Entlüftungsbohrung aufteilt,
b) eine in Richtung der Arbeitskammer axial zur Translationsstange **(8)** auf den mindestens einen Kolben wirkende Druckfeder **(13),**
c) eine in die mindestens eine Arbeitskammer **(2)** ausmündende Einlassöffnung **(20)** mit einem Anschluss an eine Druckquelle,
d)mindestens einen axial auf der Translationsstange **(8)** verschiebbaren Anschlagmitnehmer **(15)** in der Systemkammer für den mindestens einen Kolben,
e)eine selbsthemmende Verstellaktorik **(14, 16, 17, 18, 19)** für eine Positionierung des mindestens einen Anschlagmitnehmers **(15)** in der mindestens einen Systemkammer **(3),** wobei
f)die Translationsstange **(8)** zumindest einen Absatz **(30)** mit einer Querschnittsänderung zwischen den mindestens einen Kolben **(9)** und Hauptbremszylinder aufweist,
g) der Absatz ein axialer Anschlag für den mindestens einen Kolben **(9),** nicht aber für den mindestens einen Anschlagmitnehmer **(15)** auf der Translationsstange **(8)** ist,
h)der Hydraulikzylinder **(1)** starr mit dem Bremskraftverstärker oder dem Bremspedal und dem Hauptbremszylinder verbunden ist sowie
i)die Translationsstange **(8)** axial im Hydraulikzylinder **(1),** Bremskraftverstärker oder dem Bremspedal und Hauptbremszylinder verschiebbar ist.

2. Notbremseinrichtung nach Anspruch 1, **dadurch gekennzeichnet, dass** nur ein Hydraulikzylinder **(1)** mit einem Kolben **(9),** einer Arbeitskammer **(2),** Systemkammer **(3),** Anschlagmitnehmer **(15)** vorgesehen ist.

3. Notbremseinrichtung nach Anspruch 2, **dadurch gekennzeichnet, dass** der der Hydraulikzylinder **(1)** mit Kolben **(9),** Arbeitskammer, Systemkammer rotationssymmetrisch und/oder konzentrisch um die Translationsstange **(8)** angeordnet sind.

4. Notbremseinrichtung nach einem der vorgenannten Ansprüche, **dadurch gekennzeichnet, dass** die Querschnittsänderung eine Querschnittsvergrößerung ist.

5. Notbremseinrichtung nach Anspruch 4, **dadurch gekennzeichnet, dass** die Querschnittsvergrößerung ein um die Translationsstange **(8)** umlaufender Absatz ist.

6. Notbremseinrichtung nach einem der vorgenannten Ansprüche, **dadurch gekennzeichnet, dass** die Mantelfläche der Translationsstange **(8)** von der Querschnittsänderung ausgehend und zum Hauptbremszylinder hin gerichtet zumindest abschnittsweise mit einem gleichbleibenden Querschnitt eine axiale Gleitfläche für den verschiebbaren Anschlagmitnehmer **(15)** ist.

7. Notbremseinrichtung nach einem der vorgenannten Ansprüche, **dadurch gekennzeichnet, dass** die Translationsstange **(8)** im Durchtritt durch den Hydraulikzylinder **(1)** rotationssymmetrisch ist.

8. Notbremseinrichtung nach einem der vorgenannten Ansprüche, **dadurch gekennzeichnet, dass** die selbsthemmende Verstellaktorik **(14, 16, 17, 18, 19)** für eine Positionierung des mindestens einen Anschlagmitnehmers **(15)** in der Systemkammer eine reversibel aktivier- und lösbare elektromechanische Arretierungsmittel umfasst.

9. Notbremseinrichtung nach Anspruch 8, **dadurch gekennzeichnet, dass** die Arretierungsmittel nur einen Ruhezustand im aktivierbaren Zustand aufweisen.

10. Notbremseinrichtung nach einem der vorgenannten Ansprüche, **dadurch gekennzeichnet, dass** die selbsthemmende Verstellaktorik **(14, 16, 17, 18, 19)** für eine Positionierung des mindestens einen Anschlagmitnehmers in der Systemkammer einen motorischen Antrieb **(17)** umfasst.

11. Notbremseinrichtung nach Anspruch 10, **dadurch gekennzeichnet, dass** der motorische Antrieb einen Stellmotor **(17)** mit Schneckengetriebe **(16, 18)** umfasst.

12. Notbremseinrichtung nach Anspruch 10 oder 11, **dadurch gekennzeichnet, dass** der motorische Antrieb **(17)** und das Schneckengetriebe **(16, 18)** außerhalb, vorzugsweise seitlich am Hydraulikzylinder **(1)** angeordnet ist und Übertragungsmittel zwischen dem Schneckengetriebe und dem auf der Translationsstange verschiebbaren Anschlagmitnehmer **(15)** in der Systemkammer **(3)** vorgesehen sind, wobei die Übertragungsmittel durch die Entlüftungsbohrung in die Systemkammer einragen.

13. Notbremseinrichtung nach Anspruch 12, **dadurch gekennzeichnet, dass** die Übertragungsmittel eine Übersetzungswelle **(19)** mit Stirnrad **(14)** sowie eine mit dem Stirnrad in mechanischer Wechselwirkung stehende Zahnstange **(24)** auf dem Anschlagmitnehmer **(15)** umfasst.

## Claims

1. Emergency braking device for a hydraulic braking system, with a braking force booster or a brake pedal with a translation rod (8) to a main brake cylinder, comprising
a) a hydraulic cylinder (1), with at least one piston (9), which can be moved axially on the translation rod (8), which divides the internal volume of the hydraulic cylinder into at least one working chamber (2) and at least one system chamber (3) with an air bleeding borehole,
b) a pressure spring (13), taking effect onto the at least one piston in the direction of the working chamber axially to the translation rod (8),
c) an inlet opening (20) opening into the at least one working chamber (2), with a connection to a pressure source,
d) at least one contact driver element (15), which can be moved axially to the translation rod (8), in the system chamber for the at least one piston,
e) a self-inhibiting movement actuator (14, 16, 17, 18, 19) for positioning the at least one contact driver element (15) in the at least one system chamber (3),
wherein
f) the translation rod (8) comprises at least one shoulder (30), with a change in cross-section between the at least one piston (9) and the main brake cylinder,
g) the shoulder is an axial stop element for the at least one piston (9), but not for the at least one contact drive element (15) on the translation rod (8),
h) the hydraulic cylinder (1) is rigidly connected to the braking force booster or the brake pedal and the main brake cylinder, and
i) the translation rod (8) can be moved axially in the hydraulic cylinder (1), brake force booster, or brake pedal and main braking cylinder.

2. Emergency braking device according to claim 1, **characterised in that** only one hydraulic cylinder (1) is provided, with a piston (9), a working chamber (2), system chamber (3), and contact driver element (15).

3. Emergency braking device according to claim 2, **characterised in that** the hydraulic cylinder (1) with a piston (9), working chamber, and system chamber, is arranged rotationally symmetrically and/or concentrically around the translation rod (8).

4. Emergency braking device according to any one of the preceding claims, **characterised in that** the cross-section change is a cross-section enlargement.

5. Emergency braking device according to claim 4, **characterised in that** the cross-section enlargement is a shoulder which is circumferential around the translation rod (8).

6. Emergency braking device according to any one of the preceding claims, **characterised in that** the casing surface of the translation rod (8), moving outwards from the cross-section change and directed towards the main brake cylinder, is, at least in sections, with a consistent cross-section, an axial sliding surface for the movable contact drive element (15).

7. Emergency braking device according to any one of the preceding claims, **characterised in that** the translation rod (8) is rotationally symmetrical when passing through the hydraulic cylinder (1).

8. Emergency braking device according to any one of the preceding claims, **characterised in that** the self-inhibiting movement actuator (14, 16, 17, 18, 19), for positioning the at least one contact driver element (15) in the system chamber, comprises a reversible actuatable and detachable electromechanical locking means.

9. Emergency braking device according to claim 8, **characterised in that** the locking means exhibit only one position of rest in the actuatable state.

10. Emergency braking device according to any one of the preceding claims, **characterised in that** the self-inhibiting movement actuator (14, 16, 17, 18, 19), for positioning the at least one contact driver element in the system chamber, comprises a motor drive (17).

11. Emergency braking device according to claim 10, **characterised in that** the motor drive comprises an actuator motor (17) with a worm drive (16, 18).

12. Emergency braking device according to claim 10 or 11, **characterised in that** the motor drive (17) and the worm drive (16, 18) is arranged outside the hydraulic cylinder (1) and preferably laterally to it, and transfer means are provided between the worm drive and the contact driver element (15) in the system chamber (3), which can be moved on the translation rod, wherein the transfer means project into the system chamber through the air bleeding borehole.

13. Emergency braking device according to claim 12, **characterised in that** the transfer means comprise a gear transmission shaft (19) with a spur gear (14), and a toothed rod (24) which is in mechanical interaction with the spur gear, on the contact driver element (15).

## Revendications

1. Installation de frein de secours pour un système de freinage hydraulique comprenant un servofrein ou une pédale de frein avec une tige de translation (8) vers un maître-cylindre comprenant :
a) un cylindre hydraulique (1) ayant au moins un piston (9) mobile axialement sur la tige de translation (8) et qui subdivise le volume intérieur du cylindre hydraulique en au moins une chambre de travail (2) et au moins une chambre de système (3) avec un évent,
b) un ressort de compression (13) agissant en direction de la chambre de travail sur le piston, axialement par rapport à la tige de translation (8),
c) un orifice d'entrée (20) débouchant dans cette chambre de travail (2) et ayant un branchement sur une source de pression,
d) au moins une butée d'entraînement (15) coulissant axialement sur la tige de translation (8) pour au moins un piston,
e) un ensemble d'actionneurs de déplacement, autobloquants (14, 16, 17, 18, 19) pour le positionnement de cette butée d'entraînement (15) dans cette chambre de système (3),
installation dans laquelle
f) la tige de translation (8) comporte au moins un épaulement (30) avec une variation de section entre le piston (9) et le maître-cylindre,
g) l'épaulement forme une butée axiale pour le piston (9) mais non pour la butée d'entraînement (15) sur la tige de translation (8),
h) le vérin hydraulique (1) est relié rigidement au servofrein ou à la pédale de frein et au maître-cylindre ainsi que,
i) la tige de translation (8) est coulissante axialement dans le cylindre hydraulique (1), le servofrein ou la pédale de frein et le maître-cylindre.

2. Installation de frein de secours selon la revendication 1, **caractérisée en ce que**
seul un cylindre hydraulique (1) est muni d'un piston (9), d'une chambre de travail (2), d'une chambre de système (3) et d'une butée d'entraînement (15).

3. Installation de frein de secours selon la revendication 2, **caractérisée en ce que**
le cylindre hydraulique (1) est organisé avec le piston (9), la chambre de travail, la chambre de système selon une symétrie de rotation et/ou concentriquement autour de la tige de translation (8).

4. Installation de frein de secours selon l'une des revendications précédentes,
**caractérisée en ce que**
la variation de section est un agrandissement de la section.

5. Installation de frein de secours selon la revendication 4, **caractérisée en ce que**
l'agrandissement de section est un épaulement entourant la tige de translation (8).

6. Installation de frein de secours selon l'une des revendications précédentes,
**caractérisée en ce que**
la surface-enveloppe de la tige de translation (8) partant de la variation de section et en direction du maître-cylindre, constitue au moins par segment de section constante, une surface axiale de glissement pour la butée d'entraînement (15) coulissante.

7. Installation de frein de secours selon l'une des revendications précédentes,
**caractérisée en ce que**
la tige de translation (8) traverse le cylindre hydraulique (1) de manière symétrique en rotation.

8. Installation de frein de secours selon l'une des revendications précédentes,
**caractérisée en ce que**
les actionneurs de déplacement autobloquants (14, 16, 17, 18, 19) pour le positionnement d'au moins une butée d'entraînement (15) comprennent des moyens de blocage électromécaniques qui peuvent être activés ou libérés de manière réversible dans la chambre de système.

9. Installation de frein de secours selon la revendication 8, **caractérisée en ce que**
les moyens de blocage ne présentent qu'un état de repos pour leur état activé.

10. Installation de frein de secours selon l'une des revendications précédentes,
**caractérisée en ce que**
les actionneurs de déplacement autobloquants (14, 16, 17, 18, 19) pour un positionnement de la butée d'entraînement, comprennent un entraînement à moteur (17) dans la chambre de système.

11. Installation de frein de secours selon la revendication 10, **caractérisée en ce que**
l'entraînement par moteur comprend un moteur de positionnement (17) avec une transmission à vis (16, 18).

12. Installation de frein de secours selon la revendication 10 ou 11, **caractérisée en ce que**
l'entraînement à moteur (17) et la transmission à vis (16, 18) sont installés à l'extérieur et de préférence latéralement sur le cylindre hydraulique (1) et des moyens de transmission entre la transmission à vis et la butée d'entraînement (15) coulissant sur la tige de translation sont prévus dans la chambre de système (3), les moyens de transmission entrant par le perçage de l'évent dans la chambre de système.

13. Installation de frein de secours selon la revendication 12, **caractérisée en ce que**
le moyen de transmission comprend un arbre de transmission (19) avec un pignon droit (14) ainsi qu'une crémaillère (24) coopérant mécaniquement avec le pignon droit sur la butée d'entraînement (15).
